# EUROPEAN PATENT SPECIFICATION

(11) **EP 2 560 327 B1**
(45) Date of publication and mention of the grant of the patent: **04.06.2014**
(21) Application number: 10849652.2
(22) Date of filing: 12.04.2010
(51) Int. Cl.: H04L 12/741, H04L 12/745

(54) **ROUTING TABLE ESTABLISHMENT METHOD AND DEVICE**
VERFAHREN UND VORRICHTUNG ZUR ERSTELLUNG EINER ROUTINGTABELLE
PROCÉDÉ ET DISPOSITIF DE CONSTRUCTION DE TABLE DE ROUTAGE

(43) Date of publication of application: 20.02.2013
(73) Proprietor: Huawei Technologies Co., Ltd., Shenzhen, Guangdong 518129 (CN)
(72) Inventor: HU, Rui, Shenzhen Guangdong 518129 (CN); CHEN, Hongfei, Shenzhen Guangdong 518129 (CN); GONG, Jun, Shenzhen Guangdong 518129 (CN); ZHAI, Suping, Shenzhen Guangdong 518129 (CN); WANG, Xiaozhong, Shenzhen Guangdong 518129 (CN); ZHAO, Hexuan, Shenzhen Guangdong 518129 (CN)
(74) Representative: Brand, Martin G.
(86) International application number: PCT/CN2010/071698
(87) International publication number: WO 2011/127642

(56) References cited:
- CN-A- 1 787 477
- CN-A- 101 141 389
- CN-A- 101 491 015
- US-A1- 2006 056 412
- US-B1- 6 560 610
- DONG LIN ET AL: "Compress the route table stored in TCAM by using memory filter", HIGH PERFORMANCE SWITCHING AND ROUTING, 2009. HPSR 2009. INTERNATIONAL CONFERENCE ON, IEEE, PISCATAWAY, NJ, USA, 22 June 2009 (2009-06-22), pages 1-6, XP031558659, ISBN: 978-1-4244-5174-6

## Description

### FIELD OF THE INVENTION

The present invention relates to the field of communications technologies, and in particular, to a routing table establishment method and device and a routing table lookup method and device.

### BACKGROUND OF THE INVENTION

In order to prevent exhaustion of address space, the Internet Engineering Task Force (The Internet Engineering Task Force; IETF for short) proposed a temporary solution of an address structure about Classless Inter-Domain Routing (Classless Inter-Domain Routing; CIDR for short) in 1993. The CIDR is the current basis of actual lookup of a routing table, and departs from the conventional A-E classification address structure. In the CIDR, an IP network is represented by a prefix (prefix), and the prefix is synthetically represented by an IP address and a mask indicating valid bits of the IP address. The CIDR allows a router to perform routing aggregation, that is, entries of a routing table, having the same size, being adjacent in the address space, and routing the same sub-networks of the number of an integral power of 2, may be combined into one path, which only occupies one entry in the routing table. Consequently, a given address block may be partitioned according to a random bit (bit) boundary, a computer on the network allocates addresses according to a consecutive range, but the range does not need a correspondingly predefined classification, and therefore, it is called classless addressing. The CIDR can avoid extremely quick exhaustion of network addresses and rapid expansion of entries of a routing table of a backbone router, and at the same time, the length of the prefix of the network address is enabled to be a random value, and the longest prefix match (the longest prefix match) search must be performed when the routing table is looked up. Main factors of measuring the quality of a table lookup algorithm of the routing table include: the lookup speed of the routing table (determined by the times for accessing a memory, the memory's capacity required by the routing table, the difficulty of inserting/deleting entries of the routing table, and so on.

A data structure of the classless routing table may be stored in a layered data structure. The searching of the routing table is performed downwards layer by layer, and therefore, a Binary Tree (Binary Tree) or a Radix Tree (Radix Tree) and the transformations of their data structures may be used for demonstration. Table 1 is an exemplary routing table.

**Table 1**

| **Prefix Label** | **Prefix Bit Value** | **Next Hop Address** |
|---|---|---|
| P1 | 111* | H1 |
| P2 | 10* | H2 |
| P3 | 1010* | H3 |
| P4 | 10101* | H4 |

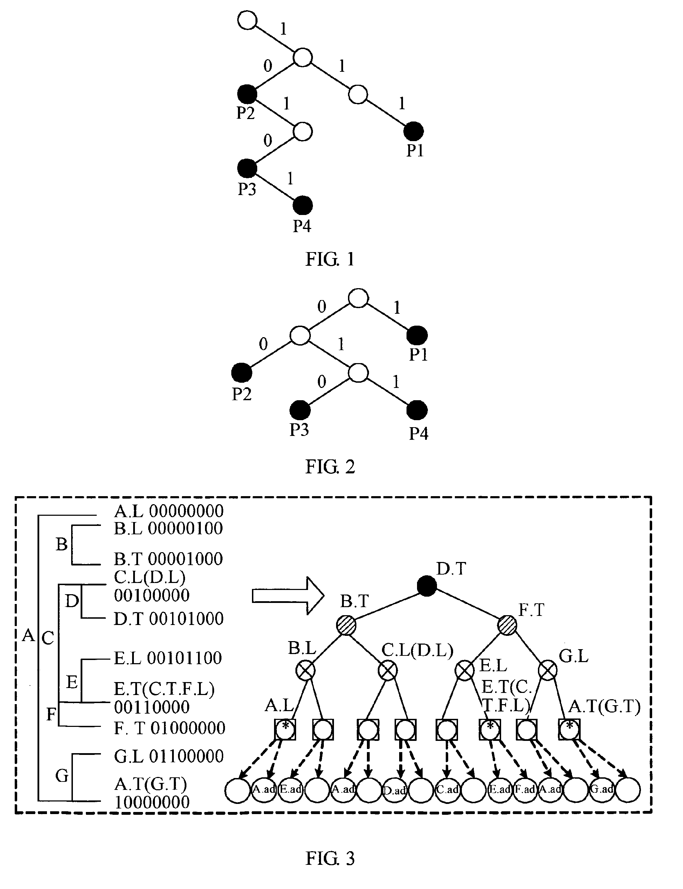

The prefixes in Table 1 may be stored in a basic Binary Tree. FIG. 1 is a schematic diagram of a conventional routing table using basic Binary Tree, and as shown in FIG. 1, "0" represents branching leftwards, and "1" represents branching rightwards. The prefix bit value determines a path downwards from the root, and prefixes P1, P2, P3, and P4 are represented by shadow. Nodes of the basic Binary Tree do not store the values of the prefixes P1-P4, and the values of P1-P4 are paths reaching corresponding nodes, so the path of the basic Binary Tree is determined by the stored data (for example, the prefix bit value), that is, the path of the basic Binary Tree represents data to be stored in the basic Binary Tree. In the basic Binary Tree, a node located on an L^{th} layer represents a class of address space having the same first L bits of the address, and the first L bit string is formed by L bits on a path from a root node to the node. The basic Binary Tree structure has low efficiency of lookup and storage, for example, for a group of conventional sub-network addresses partitioned on the B type address, first 16 bits are the same, but when the Binary Tree is traversed, only "1" bit is extracted once, so the speed is very slow, and if the maximum length of the corresponding address prefix is M, the depth of the tree is M. If K bits are checked once, the depth of the tree may be reduced to M/K, and in this way, matching entries included in internal nodes of the tree are increased to 2^{K}. Such a tree is referred to as a 2^{K} branch tree, and the maximum number of layers of the tree is M/K. The number of bits checked by the table lookup algorithm at each node is K, which is referred to as a step of the tree.

Patricia tree is a variation of the basic Binary Tree (Binary Tree), and the Patricia tree allows each node to designate a value and detect the number of bits consecutively hopped, so as to accelerate the search speed. The prefix is stored on a leave node of the Patricia tree, and it is assumed that when N prefixes exist, N leave nodes exist, and N-1 internal nodes exist additionally. A redundant branch link is compressed to a node, and therefore, the table lookup algorithm does not need to perform consecutive bit match, but matches multiple bits once to reach the leave node rapidly. FIG. 2 is a schematic diagram of a conventional routing table using Patricia tree. Leave nodes may be searched rapidly for the Patricia tree, and the efficiency of searching for a longer prefix of the Patricia tree is higher than that of the basic Binary Tree. As shown in FIG. 2, for the prefix P4, the Patricia tree may complete the lookup after 3 times of matching, while the basic Binary Tree needs 5 times.

The IP address prefix may be considered as a range, for example, 10.110.0.0/16 actually represents all IP addresses from 10.110.0.0 to 10.110.255.255, and therefore, the IP address prefix may be represented by a range [10.110.0.0, 10.110.255.255]. All the IP address prefixes are converted to ranges, and then, the problem of the longest prefix match may be converted to the problem of finding which range the IP address to be looked up falls in. This problem is similar to a sorting problem, and a routing table may be established by using a Binary Tree method. It is assumed that the IP address has 8 bits, and totally 7 IP addresses exist, masks and ranges of the IP addresses are shown as follows in Table 2.

**Table 2**

| **Serial Number** | **Mask Representation** | **Range Representation** |
|---|---|---|
| A | 00000000/1 | [00000000, 10000000) |
| B | 00000100/6 | [00000100, 00001000) |
| C | 00100000/4 | [00100000,00110000) |
| D | 00100000/5 | [00100000,00101000) |
| E | 00101100/6 | [00101100,00110000) |
| F | 00110000/4 | [00110000,01000000) |
| G | 01100000/3 | [01100000,10000000) |

As shown in FIG. 3, a schematic diagram of a conventional IP address mask range stored by adopting a Binary Tree is shown, where the left is interval representation of the IP addresses, and the right indicates putting endpoints of the interval in the Binary Tree. Each node stores a whole entry of the routing table, and one IP address prefix is divided into 2 endpoints, so that the space utilization is low.

US Patent Application US2006/056412A1 discloses a system and a method for allocating network route information between a plurality of memory devices having difference access speeds.

US Patent US6560610B1 discloses a data structure representing a set of prefixes and a method for searching the data structure.

In order to improve the low space utilization of the routing table, a routing table may be established and looked up by adopting a TRIE algorithm, and the TRIE algorithm has advantages of high compression ratio and rapid update speed. However, times for the TRIE algorithm accessing the nodes is proportional to times for accessing a memory and the length of entries, and along with the increase of a key (key) value of the TRIE algorithm, the height of the routing table is increased, and times for an IPv6 forwarding information base (Forwarding Information Base; FIB for short) looking up and accessing the memory is large, thereby reducing the throughput, deteriorating the performance, prolonging the delay, and reducing the capacity.

### SUMMARY OF THE INVENTION

Embodiments of the present invention provide a routing table establishment method and device and a routing table lookup method and device, so as to solve the problems of slow speed of looking up the routing table and prolonged delay due to the extremely great height of the tree in the conventional TRIE algorithm, thereby improving lookup speed of the routing table and reducing lookup delay.

A routing table establishment method is provided in an embodiment of the present invention, which includes:
partitioning a data structure of a routing table into a trunk and a TRIE sub-tree;
adding entries of the routing table to the TRIE sub-tree; and
storing an upgrade sub-node of the TRIE sub-tree's root in the trunk, where the height of the TRIE sub-tree is smaller than or equal to a set height threshold, and the upgrade sub-node of the TRIE sub-tree's root is a sub-root among prefix sub-nodes included in the TRIE sub-tree's root;
the method further comprises:
if the height of the TRIE sub-tree after adding the entries of the routing table is greater than the height threshold, splitting, from the TRIE sub-tree, a branch that is in the TRIE sub-tree and has the height greater than the height threshold, to obtain a new TRIE sub-tree; and
storing an upgrade sub-node of a root of the new TRIE sub-tree in the trunk, wherein the new TRIE sub-tree's root is a node connected between the branch that is in the TRIE sub-tree and has the height greater than the height threshold and the TRIE sub-tree's root; or
the method further comprises:
if the height of the TRIE sub-tree after deleting the entries of the routing table is smaller than the height threshold and the TRIE sub-tree has a parent TRIE sub-tree, combining the TRIE sub-tree's root to the parent TRIE sub-tree, and deleting, from the trunk, the upgrade sub-node of the TRIE sub-tree's root.

A routing table lookup method is further provided in an embodiment of the present invention, where a data structure of a routing table includes a trunk and a TRIE sub-tree, and an upgrade sub-node of the TRIE sub-tree's root is stored in the trunk of the routing table. The method includes:
looking up, in the trunk of the routing table, an upgrade sub-node longest matching a key word;
obtaining a location of the TRIE sub-tree's root to which the upgrade sub-node longest matching the key word corresponds; and
according to the location of the TRIE sub-tree's root to which the upgrade sub-node longest matching the key word corresponds, looking up, in the TRIE sub-tree, a lookup result corresponding to the key word by using the TRIE algorithm.

A routing table establishment device is further provided in an embodiment of the present invention, which includes:
a partitioning module, configured to partition a data structure of a routing table into a trunk and a TRIE sub-tree;
an entry adding module, configured to add entries of the routing table to the TRIE sub-tree; and
a storing module, configured to store an upgrade sub-node of the TRIE sub-tree's root in the trunk, where the height of the TRIE sub-tree is smaller than or equal to a set height threshold, and the upgrade sub-node of the TRIE sub-tree's root is a sub-root among prefix sub-nodes included in the TRIE sub-tree's root;
the device further comprises:
a splitting module, configured to, if the height of the TRIE sub-tree after the adding the entries of the routing table is greater than the height threshold, split, from the TRIE sub-tree, a branch that is in the TRIE sub-tree and has the height greater than the height threshold, to obtain a new TRIE sub-tree; and
the storing module, further configured to store an upgrade sub-node of a root of the new TRIE sub-tree in the trunk, wherein the new TRIE sub-tree's root is a node connected between the branch that is in the TRIE sub-tree and has the height greater than the height threshold and the TRIE sub-tree's root; or
the device further comprising:
a combining and deleting module, configured to, if the height of the TRIE sub-tree after splitting is smaller than the height threshold and the TRIE sub-tree has a parent TRIE sub-tree, combine the TRIE sub-tree's root to the parent TRIE sub-tree, and delete, from the trunk, the upgrade sub-node of the TRIE sub-tree's root.

A routing table lookup device is further provided in an embodiment of the present invention, which includes:
a trunk lookup module, configured to look up, in a trunk of a routing table, an upgrade sub-node longest matching a key word, where a data structure of the routing table includes the trunk and a TRIE sub-tree, and an upgrade sub-node of the TRIE sub-tree's root is stored in the trunk of the routing table;
a sub-tree location obtaining module, configured to obtain a location of the TRIE sub-tree's root to which the upgrade sub-node longest matching the key word corresponds; and
a sub-tree lookup module, configured to, according to the location of the TRIE sub-tree's root to which the upgrade sub-node longest matching the key word corresponds, look up, in the TRIE sub-tree, a lookup result corresponding to the key word by using the TRIE algorithm.

Embodiments of the present invention provide a routing table establishment method and device and a routing table lookup method and device. The data structure of the routing table is partitioned into the trunk and the TRIE sub-tree, and the sub-tree is a TRIE sub-tree established by using the TRIE algorithm, thereby ensuring the high compression ratio of the routing table; and the height of the TRIE sub-tree is controlled when the entries of the routing table are added, thereby reducing times for accessing a memory, improving lookup speed of the routing table, and reducing lookup delay.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. The accompanying drawings in the following description are only about some embodiments of the present invention, and persons of ordinary skill in the art can derive other drawings from the accompanying drawings without creative efforts.
FIG. 1 is a schematic diagram of a conventional basic Binary Tree stored routing table;
FIG. 2 is a schematic diagram of a conventional Patricia tree stored routing table;
FIG. 3 is a schematic diagram of a conventional IP address mask range stored by adopting a Binary Tree;
FIG. 4 is a flow chart of an embodiment of a routing table establishment method of the present invention;
FIG. 5a is a schematic structural diagram of a trunk and a TRIE sub-tree in an embodiment of a routing table establishment method of the present invention;
FIG. 5b is a schematic diagram of a multi-bit TRIE algorithm in an embodiment of a routing table establishment method of the present invention;
FIG. 5c is a schematic diagram of an internal bitmap of a tree bitmap algorithm in an embodiment of a routing table establishment method of the present invention;
FIG. 5d is a schematic diagram of an external bitmap of a tree bitmap algorithm in an embodiment of a routing table establishment method of the present invention;
FIG. 6a is a schematic diagram before splitting resulting from adding entries of a routing table in an embodiment of a routing table establishment method of the present invention;
FIG. 6b is a schematic diagram after splitting resulting from adding entries of a routing table in an embodiment of a routing table establishment method of the present invention;
FIG. 6c is a schematic flow chart of adding entries of a routing table in an embodiment of a routing table establishment method of the present invention;
FIG. 6d is a schematic diagram before adding IP address prefixes in an embodiment of a routing table establishment method of the present invention;
FIG. 6e is a schematic diagram after adding IP address prefixes in an embodiment of a routing table establishment method of the present invention;
FIG. 7 is a flow chart of an embodiment of a routing table lookup method of the present invention;
FIG. 8 is a schematic structural diagram of a first embodiment of a routing table establishment device of the present invention;
FIG. 9 is a schematic structural diagram of a second embodiment of a routing table establishment device of the present invention;
FIG. 10 is a schematic structural diagram of a first embodiment of a routing table lookup device of the present invention; and
FIG. 11 is a schematic structural diagram of a second embodiment of a routing table lookup device of the present invention.

### DETAILED DESCRIPTION OF THE EMBODIMENTS

Technical solutions of the present invention are further illustrated in detail below through the accompanying drawings and embodiments.

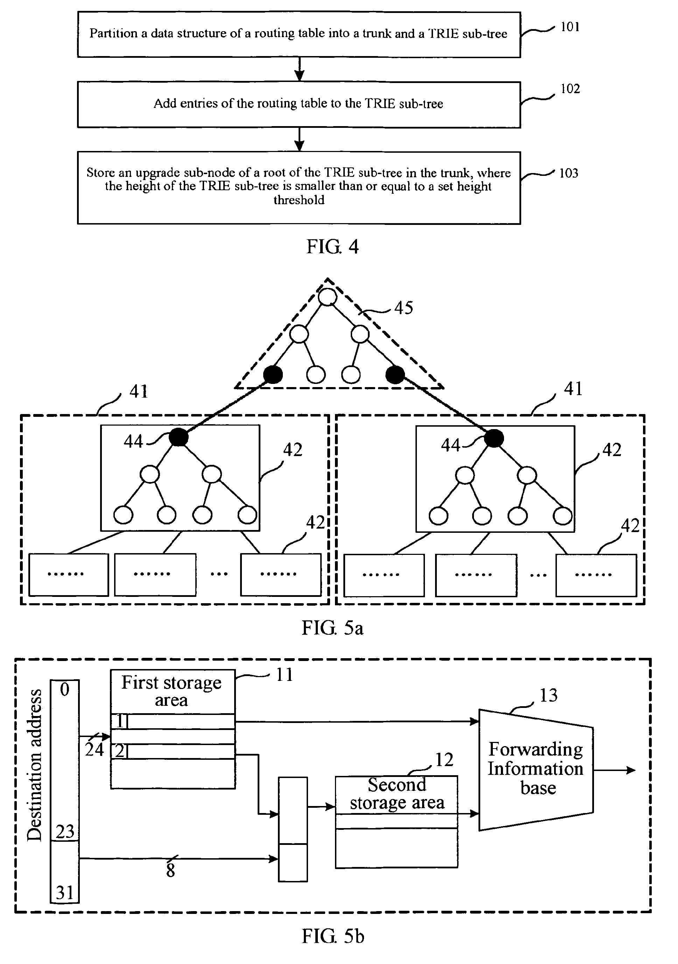

FIG. 4 is a flow chart of an embodiment of a routing table establishment method of the present invention. As shown in FIG. 4, the routing table establishment method includes the following steps.

101: Partition a data structure of a routing table into a trunk and a TRIE sub-tree.

102: Add entries of the routing table to the TRIE sub-tree.

103: Store an upgrade sub-node of the TRIE sub-tree's root in the trunk, where the height of the TRIE sub-tree is smaller than or equal to a set height threshold, and the upgrade sub-node of the TRIE sub-tree's root is a sub-root among prefix sub-nodes included in the TRIE sub-tree's root.

The routing table may be stored in a layered data structure, a data structure of the routing table may be partitioned in advance into a trunk and a TRIE sub-tree, and an upgrade sub-node of the TRIE sub-tree's root is stored in the trunk. The TRIE sub-tree may be established by adopting the TRIE algorithm. The tree established by using the TRIE algorithm is also referred to as a Trie tree, which is of a tree structure and is a variation of Hash Tree. The establishment method of the trunk may adopt, but not limited to, range matching, B tree, a ternary content addressable memory or other algorithms. FIG. 5a is a schematic structural diagram of a trunk and a TRIE sub-tree in an embodiment of a routing table establishment method of the present invention. As shown in FIG. 5a, each node 42 of a TRIE sub-tree 41 established by adopting the TRIE algorithm may include multiple prefix sub-nodes. The top layer node 42 of the TRIE sub-tree 41 is a root, a top layer prefix sub-node in the TRIE sub-tree's root 41 is an upgrade sub-node 44, and the upgrade sub-node 44 of the TRIE sub-tree 41 is stored in a trunk 45, that is, the upgrade sub-node 44 belongs to the TRIE sub-tree 41 and the trunk 45 at the same time, and the trunk is equivalent to a database for storing the upgrade sub-node.

Two kinds of TRIE algorithm are introduced in the following.

FIG. 5b is a schematic diagram of a multi-bit (multi-bit) TRIE algorithm in an embodiment of a routing table establishment method of the present invention. The multi-bit TRIE algorithm uses indexes of multiple bits (bit) of an IP address to form an array, associates, according to the precedence order of the arrays in the IP address, arrays formed by different bits of the IP address, and looks up, level by level, multiple bits at a time during the lookup. In FIG. 5b, the first 24 bits are a first level, and the last 8 bits are a second level. If the first 24 bits are matched successfully in a first storage area 11, an obtained matching result may be directly sent to a forwarding information base 13; and if a part of the first 24 bits are matched in the first storage area 11, the first 24 bits and the last 8 bits are combined to be matched in a second storage area 12, and when the matching is successful, an obtained matching result may be sent to the forwarding information base 13.

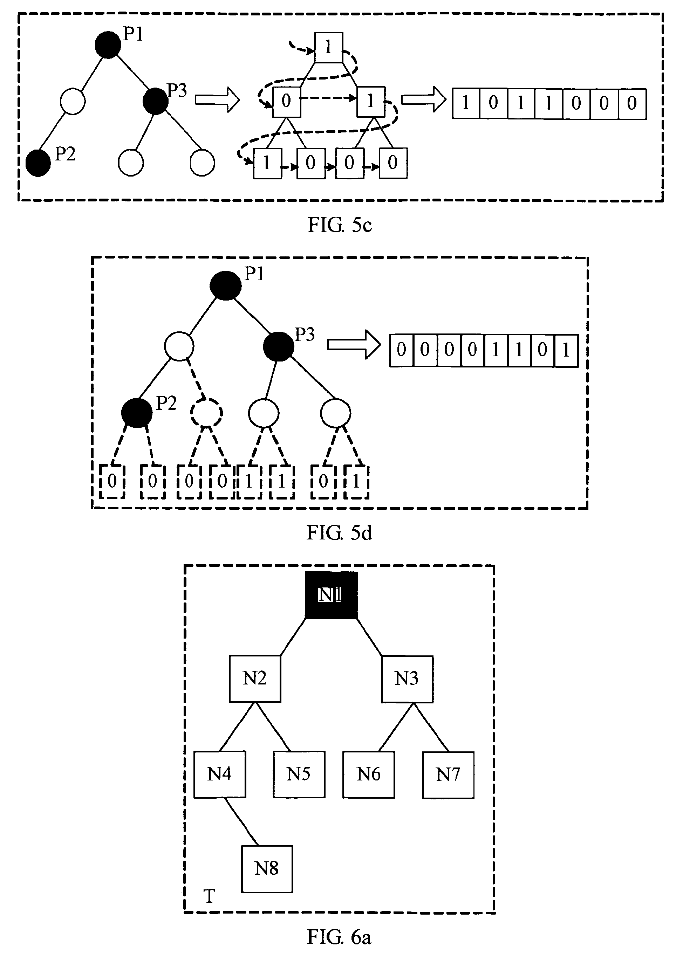

FIG. 5c is a schematic diagram of an internal bitmap of a tree bitmap (Tree bitmap) algorithm in an embodiment of a routing table establishment method of the present invention, and FIG. 5d is a schematic diagram of an external bitmap of a tree bitmap algorithm in an embodiment of a routing table establishment method of the present invention. The tree bitmap algorithm also belongs to the multi-bit TRIE algorithm, and the tree bitmap algorithm uses a bitmap (bitmap) to represent which prefixes a node has and which child nodes the node has. The internal bitmap (Internal bitmap) represents which prefixes the node has, for example, in FIG. 5c, a node of the TRIE sub-tree may store 7 prefixes, but in fact, only three prefixes are stored in the locations of prefix sub-nodes P1, P2, and P3, and a bit (bit) of the internal bitmap stored with a prefix is set as "1", and a bit that is not stored with a prefix is set as "0", so as to obtain "1011000". The external bitmap (External bitmap) may represent which child nodes a node of the TRIE sub-tree has, and as shown in FIG. 5d, the node may have 8 child nodes at most, but in fact, only three child nodes exist, a location where a child node exists is set as "1", and a location where no child node exists is set as "0".

When the data structure of the routing table is established, the TRIE algorithm may be adopted to establish a TRIE sub-tree, and then, during the specific process of adding entries of the routing table or deleting entries of the routing table, corresponding update is performed on an upgrade sub-node stored in the trunk of the routing table according to a set height threshold, and specifically the following scenarios are included.

### Scenario 1: Add entries of a routing table.

If the height of the TRIE sub-tree after adding the entries of the routing table is greater than the height threshold, then a branch that is in the TRIE sub-tree and has the height greater than the height threshold is split from the TRIE sub-tree, so as to obtain a new TRIE sub-tree.

An upgrade sub-node of a root of the new TRIE sub-tree is stored in the trunk, where the new TRIE sub-tree's root is a node connected between the branch that is in the TRIE sub-tree and has the height greater than the height threshold and the TRIE sub-tree's root.

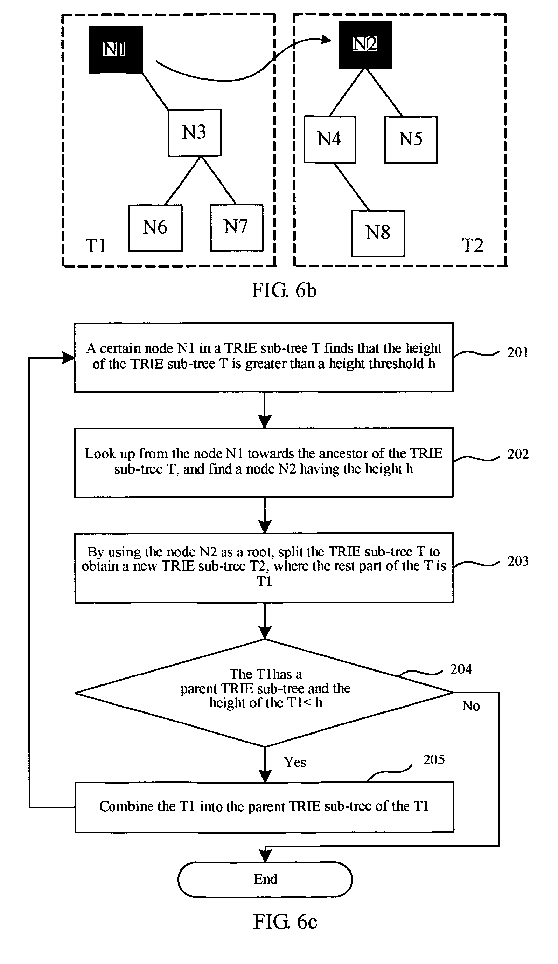

FIG. 6a is a schematic diagram before splitting resulting from adding entries of a routing table in an embodiment of a routing table establishment method of the present invention, and FIG. 6b is a schematic diagram after splitting resulting from adding entries of a routing table in an embodiment of a routing table establishment method of the present invention. It is assumed that the preset height threshold is "3", when entries of the routing table, for example, IP address prefixes, are added to the routing table, if the heights of all TRIE sub-trees of the routing table do not exceed "3", the entries of the routing table are added to corresponding locations in the routing table. After the entries of the routing table are added, if the height of a certain TRIE sub-tree is greater than "3", as shown in FIG. 6a, the height is "4" after the entries of the routing table are added, and in two branches of a root N1 of a TRIE sub-tree T, the height of the branch being N1->N2->N4->N8 is greater than the height threshold. At this time, as shown in FIG. 6b, in order to ensure the height of the TRIE sub-tree T, the TRIE sub-tree T may be split from N2, the branch whose branch height is greater than the height threshold is used as a new TRIE sub-tree T2, N2 is a root of the new TRIE sub-tree T2, a top layer prefix sub-node of N2 may be used as an upgrade sub-node of the new TRIE sub-tree T2 and stored in the trunk, and the rest part of the T after the splitting is a TRIE sub-tree T1. After the TRIE sub-tree is split to obtain the new TRIE sub-tree, the correspondence between the new TRIE sub-tree's root and the TRIE sub-tree's root is unchanged, and the relationship between the upgrade sub-node of the new TRIE sub-tree and the upgrade sub-node of the TRIE sub-tree is embodied in the trunk.

Further, during the process of adding entries of the routing table, if the height of the TRIE sub-tree after splitting is smaller than the height threshold and the TRIE sub-tree has a parent TRIE sub-tree, the TRIE sub-tree's root may be combined to the parent TRIE sub-tree, and the upgrade sub-node of the TRIE sub-tree's root is deleted from the trunk.

According to FIG. 6b, it is assumed that after the entries of the routing table are added, it is required to split the TRIE sub-tree T1 from N3, the split T1 only has the node N1 left, and at this time, the height of the split T1 is "1", which is smaller than the height threshold. If the split T1 has a parent TRIE sub-tree, the split T1 may be combined into the parent TRIE sub-tree. FIG. 6c is a schematic flow chart of adding entries of a routing table in an embodiment of a routing table establishment method of the present invention. As shown in FIG. 6c, together with FIG. 6a and FIG. 6b, the process of adding the entries of the routing table may specifically include the following steps.

201: A certain node N1 (root) in a TRIE sub-tree T finds that the height of the TRIE sub-tree T is greater than a height threshold h.

202: Look up from the node N1 towards the ancestor of the TRIE sub-tree T, and find a node N2 having the height h.

203: By using the node N2 as a root, split the TRIE sub-tree T to obtain a new TRIE sub-tree T2, where the rest part of the T is T1.

204: Determine whether the height of the T1 is smaller than the preset height threshold h, and if the T1 has a parent TRIE sub-tree (also referred to as a father sub-tree, a father, and so on) and the height of the T1 is smaller than h, perform 205; otherwise, end the process.

205: Combine the TRIE sub-tree T1 into the parent TRIE sub-tree of the T1, use the combined TRIE sub-tree as the TRIE sub-tree T, and return to 201.

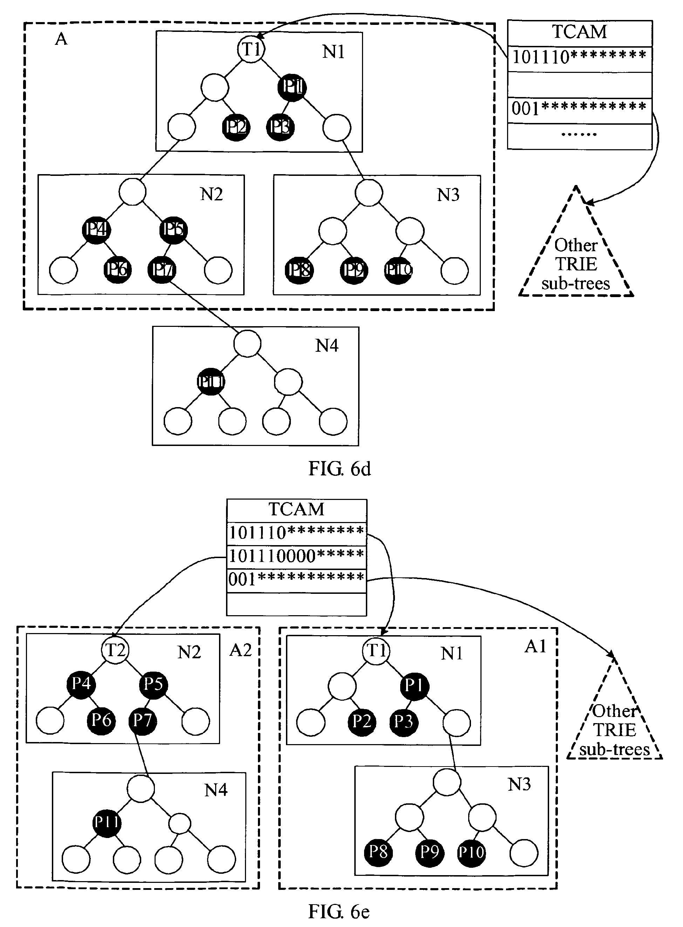

In order to illustrate the specific process of adding the entries of the routing table, by taking an example that entries that are added to the routing table are IP address prefixes, it is assumed that the height threshold of the TRIE sub-tree is "2", the prefix sub-nodes in each node of the TRIE sub-tree are of 3 levels, and each node has totally 7 prefix sub-nodes, 14 bits are used to identity an IP address prefix, and the trunk is stored in a ternary content addressable memory (Ternary Content Addressable Memory; TCAM for short). As shown in FIG. 6d, FIG. 6d is a schematic diagram before adding IP address prefixes in an embodiment of a routing table establishment method of the present invention. In the IP address prefixes stored in some prefix sub-nodes of a TRIE sub-tree A, an IP address prefix stored in P1 is "1011101*******", an IP address prefix stored in P2 is "10111001******", an IP address prefix stored in P3 is "10111010******", an IP address prefix stored in P4 is "1011100000****", an IP address prefix stored in P5 is "1011100001****", an IP address prefix stored in P6 is "10111000001 ***", an IP address prefix stored in P7 is "10111000010***", an IP address prefix stored in P8 is "10111011100***", an IP address prefix stored in P9 is "10111011101***", and an IP address prefix stored in P10 is "10111011110***". The upgrade sub-node in the root N1 of the TRIE sub-tree A is the stored IP address prefix, but according to a path of the routing table, an IP address prefix corresponding to the upgrade sub-node T1 of N1 should be "101110********", and therefore, a trunk TCAM stores the IP address prefix "101110********" of the upgrade sub-node T1 of the TRIE sub-tree A. Likewise, the trunk TCAM may also store IP address prefixes, such as "001***********", of the upgrade sub-nodes of other TRIE sub-trees. It is assumed that the IP address prefix required to be added is "1011100001010*", it is required to add a prefix sub-node P11 in the TRIE sub-tree A, but after the P11 is added, the height of the TRIE sub-tree A is "3" after the node N4 is added, and the height is greater than a set height threshold "2", so splitting needs to be performed.

As shown in FIG. 6e, FIG. 6e is a schematic diagram after adding IP address prefixes in an embodiment of a routing table establishment method of the present invention. In the TRIE sub-tree A, the height of a branch where N2 and N4 are located is greater than the height threshold, so the branch is split from the TRIE sub-tree A to be a new TRIE sub-tree A2, and the rest part is A1 (including nodes N1 and N3). At this time, an IP address prefix corresponding to an upgrade sub-node T2 of the root N2 of the A2 should be "101110000*****"; and an IP address prefix of the upgrade sub-node T1 of the A1 is the same as that of the A, that is, "101110********". The IP address prefix "101110000*****" of the upgrade sub-node T2 of the A2 is stored in the trunk TCAM, and the correspondence between the T2 and the T1 is embodied in the trunk, thereby the splitting process is completed.

### Scenario 2: Delete entries of a routing table.

If the height of the TRIE sub-tree after deleting the entries of the routing table is smaller than the height threshold and the TRIE sub-tree has a parent TRIE sub-tree, the TRIE sub-tree's root may be combined to the parent TRIE sub-tree, and the upgrade sub-node of the TRIE sub-tree's root is deleted from the trunk.

The process of combing the TRIE sub-tree's root to the parent TRIE sub-tree is similar to the process of adding entries of the routing table to the parent TRIE sub-tree. Whether the height of the parent TRIE sub-tree is greater than the height threshold may also be determined, and if the height of the parent TRIE sub-tree is greater than the height threshold, splitting processing may be performed on the parent TRIE sub-tree. It is also possible to perform combining or splitting processing on a grandparent TRIE sub-tree. After layers of combination and splitting, it is ensured that the height of each TRIE sub-tree without a parent TRIE sub-tree is a set height threshold.

In this embodiment, the data structure of the routing table is partitioned into the trunk and the TRIE sub-tree, and the sub-tree is a TRIE sub-tree established by using the TRIE algorithm, thereby ensuring the high compression ratio of the routing table; and the height of the TRIE sub-tree may be controlled according to the set height threshold, thereby reducing times for accessing a memory, improving lookup speed, and reducing lookup delay.

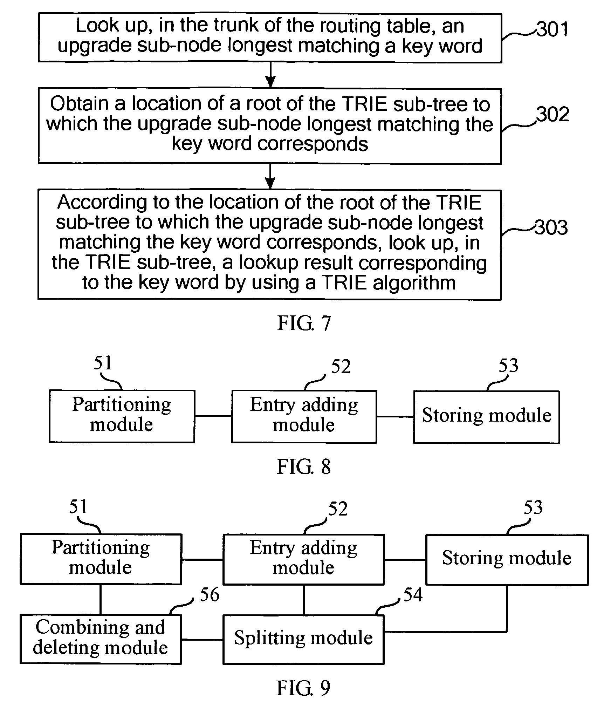

FIG. 7 is a flow chart of an embodiment of a routing table lookup method of the present invention. As shown in FIG. 7, the routing table lookup method includes the following steps.

301: Look up, in a trunk of a routing table, an upgrade sub-node longest matching a key word.

The routing table may be stored in a layered data structure, a data structure of the routing table includes a trunk and a TRIE sub-tree, and an upgrade sub-node of the TRIE sub-tree's root is stored in the trunk, where the upgrade sub-node of the TRIE sub-tree's root is a sub-root among prefix sub-nodes included in the TRIE sub-tree's root. The TRIE sub-tree may be established by adopting the TRIE algorithm, and the establishment method of the trunk may adopt, but not limited to, range matching, B tree, a ternary content addressable memory or other algorithms. For the specific structure of the routing table, reference may be made to related description in the foregoing embodiment and FIG. 5a.

The specific process of looking up the upgrade sub-node longest matching the key word in the trunk of the routing table may include: looking up, from upgrade sub-nodes of TRIE sub-trees stored in the trunk of the routing table, first prefixes matching the key word; and selecting, from the first prefixes, a first prefix of the longest mask length to serve as the upgrade sub-node longest matching the key word. When the first prefixes corresponding to the key word is looked up, a part of data in the key word is matched with each upgrade sub-node in the trunk, and the matching method may be selected according to the establishment method of the trunk.

302: Obtain a location of the TRIE sub-tree's root to which the upgrade sub-node longest matching the key word corresponds.

Address information of the upgrade sub-node longest matching the key word may direct to the TRIE sub-tree's root where the upgrade sub-node is located, and according to the address information, the location of the TRIE sub-tree's root to which the upgrade sub-node corresponds may be obtained.

303: According to the location of the TRIE sub-tree's root to which the upgrade sub-node longest matching the key word corresponds, look up, in the TRIE sub-tree, a lookup result corresponding to the key word by using the TRIE algorithm.

303 may specifically include:
according to the location of the TRIE sub-tree's root to which the upgrade sub-node longest matching the key word corresponds, looking up, from prefix sub-nodes of nodes of the TRIE sub-tree to which the upgrade sub-node longest matching the key word corresponds, second prefixes matching the key word; and
selecting, from the second prefixes, a second prefix of the longest mask length to serve as the lookup result.

When each second prefix corresponding to the key word is looked up, a part of data in the key word is matched with a prefix sub-node of each node of the TRIE sub-tree, and the matching method may adopt the TRIE algorithm used for establishing the TRIE sub-tree.

The lookup process is illustrated specifically by taking the lookup in the routing table in FIG. 6e in the foregoing embodiment as an example. It is assumed that the key word for lookup is "10111000011000", an upgrade sub-node matching the key word is looked up in a trunk TCAM currently, and the upgrade sub-node matching the key word should be an IP address prefix corresponding to one or more upgrade sub-nodes stored in the TCAM. After the routing table shown in FIG. 6e is searched by using the key word "10111000011000", hit upgrade sub-nodes are two IP address prefixes: "101110********" and "101110000****", which direct to TRIE sub-trees A1 and A2, respectively. The mask length of the IP address prefix "101110000****" corresponding to the TRIE sub-tree A2 is longer than that of the IP address prefix "101110********" corresponding to the TRIE sub-tree A1, and therefore, the TRIE sub-tree A2 may be selected to perform further lookup by using the TRIE algorithm. In the TRIE sub-tree A2, matching is performed continuously on the unmatched data "11000" in the key word, and finally, the IP address prefix "1011100001****" of the P5 in the node N2 of the TRIE sub-tree A2 is found. Therefore, it can be obtained that the key word hits the IP address prefix of the P5. If the number of hit IP address prefixes is more than one, an IP address prefix of the longest mask length is selected to serve as a final lookup result.

In this embodiment, the data structure of the routing table is partitioned into the trunk and the TRIE sub-tree that is established by using the TRIE algorithm, thereby ensuring the high compression ratio of the routing table; and the height of the TRIE sub-tree may be controlled according to the set height threshold, thereby reducing times for accessing a memory when a routing table is searched, improving lookup speed, and reducing lookup delay.

FIG. 8 is a schematic structural diagram of a first embodiment of a routing table establishment device of the present invention. As shown in FIG. 8, the routing table establishment device includes: a partitioning module 51, an entry adding module 52 and a storing module 53.

The partitioning module 51 is configured to partition a data structure of a routing table into a trunk and a TRIE sub-tree.

The entry adding module 52 is configured to add entries of the routing table to the TRIE sub-tree.

The storing module 53 is configured to store an upgrade sub-node of the TRIE sub-tree's root in the trunk, where the height of the TRIE sub-tree is smaller than or equal to a set height threshold, and the upgrade sub-node of the TRIE sub-tree's root's root is a sub-root among prefix sub-nodes included in the TRIE sub-tree's root.

Specifically, in the data structure stored in the routing table, the partitioning module 51 partitions the data structure of the routing table into the trunk and the TRIE sub-tree, the TRIE sub-tree is established by adopting the TRIE algorithm, and the trunk is established by another algorithm such as: range matching, B tree, or a ternary content addressable memory. After the entry adding module 52 adds entries of the routing table to the TRIE sub-tree, the storing module 53 stores the upgrade sub-node of the TRIE sub-tree's root in the trunk, and presets a height threshold, where the height of the TRIE sub-tree is smaller than or equal to the set height threshold. If the TRIE sub-tree is established by adopting the TRIE algorithm, and the height after adding the entries of the routing table, for example, IP address prefixes, is greater than the height threshold, the TRIE sub-tree after adding the entries of the routing table may be split, and the height of the TRIE sub-tree in the data structure of the routing table is controlled to be the height threshold. After the data structure of the routing table is established, entries of the routing table therein may need to be deleted, and after certain entries of the routing table are deleted, if the height of the TRIE sub-tree after deleting the entries of the routing table is smaller than or equal to the height threshold, the TRIE sub-tree after deleting the entries of the routing table is combined with a parent TRIE sub-tree. In this embodiment, for the specific process of establishing the routing table, reference may be made to the related description in the embodiment of the routing table establishment method of the present invention.

In this embodiment, the data structure of the routing table is partitioned into the trunk and the TRIE sub-tree, and the sub-tree is established by using the TRIE algorithm, thereby ensuring the high compression ratio of the routing table; and an update module may control the height of the TRIE sub-tree according to the set height threshold, thereby reducing times for accessing a memory, improving lookup speed, and reducing lookup delay.

FIG. 9 is a schematic structural diagram of a second embodiment of a routing table establishment device of the present invention. As shown in FIG. 9, on the basis of the second embodiment of the routing table establishment device of the present invention, the routing table establishment device may further include: a splitting module 54, configured to, if the height of the TRIE sub-tree after adding the entries of the routing table is greater than the height threshold, split, from the TRIE sub-tree, a branch that is in the TRIE sub-tree and has the height greater than the height threshold, to obtain a new TRIE sub-tree.

In addition, the storing module 53 is further configured to store an upgrade sub-node of the new TRIE sub-tree's root in the trunk, where the new TRIE sub-tree's root is a node connected between the branch that is in the TRIE sub-tree and has the height greater than the height threshold and the TRIE sub-tree's root.

Alternatively, the routing table establishment device may further include: a combining and deleting module 56, configured to, if the height of the TRIE sub-tree after splitting is smaller than the height threshold and the TRIE sub-tree has a parent TRIE sub-tree, combine the TRIE sub-tree's root to the parent TRIE sub-tree, and delete, from the trunk, the upgrade sub-node of the TRIE sub-tree's root.

The combining and deleting module 56 is further configured to, if the height of the TRIE sub-tree after deleting the entries of the routing table is smaller than the height threshold and the TRIE sub-tree has a parent TRIE sub-tree, combine the TRIE sub-tree's root to the parent TRIE sub-tree, and delete the upgrade sub-node of the TRIE sub-tree's root from the trunk.

Specifically, in the data structure stored in the routing table, the partitioning module 51 may partition the data structure of the routing table into the trunk and the TRIE sub-tree in advance, and the upgrade sub-node of the TRIE sub-tree's root is stored in the trunk. The TRIE sub-tree is established by adopting the TRIE algorithm, and for the specific method of establishing the TRIE sub-tree, reference may be referred to the description of related examples of the embodiment of the routing table establishment method of the present invention. The trunk where the TRIE sub-tree is located is established by adopting a method such as: range matching, B tree, or a TCAM. After the entry adding module 52 adds entries of the routing table to the TRIE sub-tree, the storing module 53 stores the upgrade sub-node of the TRIE sub-tree's root in the trunk, and presets a height threshold, where the height of the TRIE sub-tree is smaller than or equal to the set height threshold. When the entries of the routing table are added, if the height of the TRIE sub-tree after adding the entries of the routing table is greater than the set height threshold, the splitting module 54 splits, from the TRIE sub-tree, the branch that is in the TRIE sub-tree and has the height greater than the height threshold, to obtain the new TRIE sub-tree. If the height of the TRIE sub-tree after splitting is smaller than the height threshold and the TRIE sub-tree has a parent TRIE sub-tree, the combining and deleting module 56 combines the TRIE sub-tree's root to the parent TRIE sub-tree, and deletes, from the trunk, the upgrade sub-node of the TRIE sub-tree's root.

After the data structure of the routing table is established, entries of the routing table therein, for example, IP address prefixes, may need to be deleted, and after certain entries of the routing table are deleted, if the height of the TRIE sub-tree after deleting the entries of the routing table is smaller than or equal to the height threshold, and the TRIE sub-tree has a parent TRIE sub-tree, the combining and deleting module 56 may further be configured to combine the TRIE sub-tree's root to the parent TRIE sub-tree, and delete, from the trunk, the upgrade sub-node of the TRIE sub-tree's root.

In this embodiment, the data structure of the routing table is partitioned into the trunk and the TRIE sub-tree, and the sub-tree is established by using the TRIE algorithm, thereby ensuring the high compression ratio of the routing table; when the entries of the routing table are added, the splitting module and the storing module may split the TRIE sub-tree whose height is greater than the height threshold; and when the entries of the routing table are deleted, the deleting module and the entry adding module may combine the TRIE sub-tree whose height is smaller than the height threshold, so that the height of the TRIE sub-tree is controlled, thereby reducing times for accessing a memory, improving lookup speed, and reducing lookup delay.

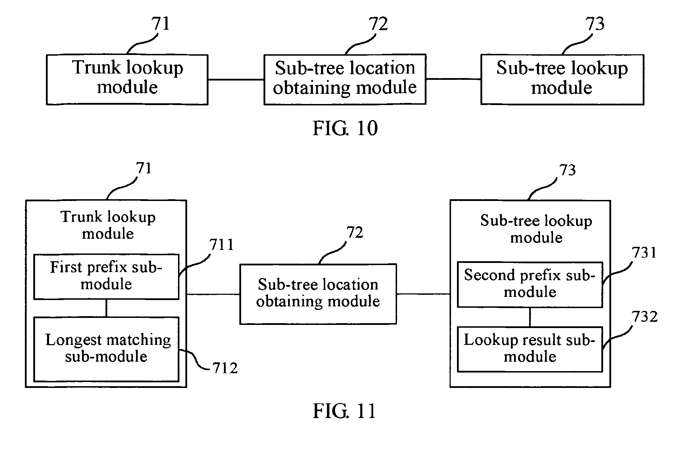

FIG. 10 is a schematic structural diagram of a first embodiment of a routing table lookup device of the present invention. As shown in FIG. 10, the routing table lookup device includes:
a trunk lookup module 71, configured to look up, in a trunk of a routing table, an upgrade sub-node longest matching a key word, where a data structure of the routing table includes the trunk and a TRIE sub-tree, and an upgrade sub-node of the TRIE sub-tree's root is stored in the trunk of the routing table;
a sub-tree location obtaining module 72, configured to obtain a location of the TRIE sub-tree's root to which the upgrade sub-node longest matching the key word corresponds; and
a sub-tree lookup module 73, configured to, according to the location of the TRIE sub-tree's root to which the upgrade sub-node longest matching the key word corresponds, look up, in the TRIE sub-tree, a lookup result corresponding to the key word by using the TRIE algorithm.

Specifically, the routing table may be stored in a layered data structure, a data structure of the routing table includes a trunk and a TRIE sub-tree, and an upgrade sub-node of the TRIE sub-tree's root is stored in the trunk, where the upgrade sub-node of the TRIE sub-tree's root is a sub-root among prefix sub-nodes included in the TRIE sub-tree's root. The TRIE sub-tree may be established by adopting the TRIE algorithm, and the establishment method of the trunk may adopt, but not limited to, range matching, B tree, a ternary content addressable memory or other algorithms. The trunk lookup module 71 may look up, in the trunk of the data structure of the routing table, the upgrade sub-node longest matching the key word. The sub-tree location obtaining module 72 may obtain, according to address information in the upgrade sub-node longest matching the key word, the location of the root of the corresponding TRIE sub-tree. The sub-tree lookup module 73 may find, according to the location of the TRIE sub-tree's root to which the upgrade sub-node longest matching the key word corresponds, in the corresponding TRIE sub-tree the lookup result corresponding to the key word by using the TRIE algorithm.

In this embodiment, the data structure of the routing table is partitioned into the trunk and the TRIE sub-tree that is established by using the TRIE algorithm, thereby ensuring the high compression ratio of the routing table; and the height of the TRIE sub-tree may be controlled according to the set height threshold, and therefore, when the routing table is searched, the trunk lookup module finds the upgrade sub-node longest matching the key word, the sub-tree location obtaining module may obtain the location of the TRIE sub-tree corresponding to the key word, and the sub-tree lookup module looks up, in the corresponding TRIE sub-tree, the lookup result corresponding to the key word, thereby reducing times for accessing a memory, improving lookup speed, and reducing lookup delay.

FIG. 11 is a schematic structural diagram of a second embodiment of a routing table lookup device of the present invention. On the basis of the first embodiment of the routing table lookup device of the present invention, as shown in FIG. 11, the trunk lookup module 71 of the routing table lookup device includes:
a first prefix sub-module 711, configured to look up, from upgrade sub-nodes of TRIE sub-trees stored in the trunk of the routing table, first prefixes matching the key word; and
a longest matching sub-module 712, configured to select, from the first prefixes, a first prefix of the longest mask length to serve as the upgrade sub-node longest matching the key word.

Further, the sub-tree lookup module 73 includes:
a second prefix sub-module 731, configured to, according to the location of the TRIE sub-tree's root to which the upgrade sub-node longest matching the key word corresponds, look up, from prefix sub-nodes of nodes of the TRIE sub-tree to which the upgrade sub-node longest matching the key word corresponds, second prefixes matching the key word; and
a lookup result sub-module 732, configured to select, from the second prefixes, a second prefix of the longest mask length to serve as the lookup result.

Specifically, after the first prefix sub-module 711 looks up, from the upgrade sub-nodes of TRIE sub-trees stored in the trunk of the routing table, the first prefixes matching the key word, the longest matching sub-module 712 selects, from the first prefixes, the first prefix of the longest mask length to serve as the upgrade sub-node longest matching the key word. The sub-tree location obtaining module 72 obtains the location of the root of the corresponding TRIE sub-tree according to the upgrade sub-node longest matching the key word. Then, according to the location of the TRIE sub-tree's root to which the upgrade sub-node longest matching the key word corresponds, the second prefix sub-module 731 looks up, from prefix sub-nodes of nodes of the TRIE sub-tree to which the upgrade sub-node longest matching the key word corresponds, the second prefixes matching the key word. The lookup result sub-module 732 selects, from the second prefixes, the second prefix of the longest mask length to serve as the lookup result.

In this embodiment, the data structure of the routing table is partitioned into the trunk and the TRIE sub-tree that is established by using the TRIE algorithm, thereby ensuring the high compression ratio of the routing table; and the height of the TRIE sub-tree may be controlled according to the set height threshold, and therefore, when the routing table is searched, after each sub-module of the trunk lookup module finds the upgrade sub-node longest matching the key word, the sub-tree location obtaining module may obtain the location of the TRIE sub-tree corresponding to the key word, and each sub-module of the sub-tree lookup module looks up, in the corresponding TRIE sub-tree, the lookup result corresponding to the key word, thereby reducing times for accessing a memory, improving lookup speed, and reducing lookup delay.

Persons of ordinary skill in the art should understand that all or a part of the steps of the method according to the method embodiments of the present invention may be implemented by a program instructing relevant hardware. The program may be stored in a computer readable storage medium. When the program is executed, the steps of the method according to the embodiments of the present invention are performed. The storage medium may be any medium that is capable of storing program codes, such as a ROM, a RAM, a magnetic disk, or an optical disk.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not cause the essence of the corresponding technical solutions to depart from the scope of the technical solutions of the embodiment of the present invention.

## Claims

1. A routing table establishment method, comprising:
Partitioning (101) a data structure of a routing table into a trunk and a TRIE sub-tree;
adding (102) entries of the routing table to the TRIE sub-tree; and
storing (103) an upgrade sub-node of the TRIE sub-tree's root in the trunk, wherein a height of the TRIE sub-tree is smaller than or equal to a set height threshold, and the upgrade sub-node of the TRIE sub-tree's root is a sub-root among prefix sub-nodes comprised in the TRIE sub-tree's root;
the method further comprises:
if the height of the TRIE sub-tree after adding the entries of the routing table is greater than the height threshold, splitting, from the TRIE sub-tree, a branch that is in the TRIE sub-tree and has the height greater than the height threshold, to obtain a new TRIE sub-tree; and
storing an upgrade sub-node of a root of the new TRIE sub-tree in the trunk, wherein the new TRIE sub-tree's root is a node connected between the branch that is in the TRIE sub-tree and has the height greater than the height threshold and the TRIE sub-tree's root; or
the method further comprises:
if the height of the TRIE sub-tree after deleting entries of the routing table is smaller than the height threshold and the TRIE sub-tree has a parent TRIE sub-tree, combining the TRIE sub-tree's root to the parent TRIE sub-tree, and deleting, from the trunk, the upgrade sub-node of the TRIE sub-tree's root.

2. The routing table establishment method according to claim 1, further comprising:
if the height of the TRIE sub-tree after the splitting is smaller than the height threshold and the TRIE sub-tree has a parent TRIE sub-tree, combining the TRIE sub-tree's root to the parent TRIE sub-tree, and deleting, from the trunk, the upgrade sub-node of the TRIE sub-tree's root.

3. The routing table establishment method according to any one of claims 1 to 2, further comprising:
establishing the TRIE sub-tree by using a TRIE algorithm, and establishing the trunk by using range matching, B tree, or a ternary content addressable memory.

4. A routing table establishment device, comprising:
a partitioning module (51), configured to partition a data structure of a routing table into a trunk and a TRIE sub-tree;
an entry adding module (52), configured to add entries of the routing table to the TRIE sub-tree; and
a storing module (53), configured to store an upgrade sub-node of the TRIE sub-tree's root in the trunk, wherein the height of the TRIE sub-tree is smaller than or equal to a set height threshold, and the upgrade sub-node of the TRIE sub-tree's root is a sub-root among prefix sub-nodes comprised in the TRIE sub-tree's root;
the device further comprises:
a splitting module (54), configured to, if the height of the TRIE sub-tree after the adding the entries of the routing table is greater than the height threshold, split, from the TRIE sub-tree, a branch that is in the TRIE sub-tree and has the height greater than the height threshold, to obtain a new TRIE sub-tree; and
the storing module (53), further configured to store an upgrade sub-node of a root of the new TRIE sub-tree in the trunk, wherein the new TRIE sub-tree's root is a node connected between the branch that is in the TRIE sub-tree and has the height greater than the height threshold and the TRIE sub-tree's root; or
the device further comprising:
a combining and deleting module (56), configured to, if the height of the TRIE sub-tree after splitting is smaller than the height threshold and the TRIE sub-tree has a parent TRIE sub-tree, combine the TRIE sub-tree's root to the parent TRIE sub-tree, and delete, from the trunk, the upgrade sub-node of the TRIE sub-tree's root.

5. The routing table establishment device according to claim 4, wherein the combining and deleting module (56) is further configured to, if the height of the TRIE sub-tree after deleting entries of the routing table is smaller than the height threshold and the TRIE sub-tree has a parent TRIE sub-tree, combine the TRIE sub-tree's root to the parent TRIE sub-tree, and delete, from the trunk, the upgrade sub-node of the TRIE sub-tree's root.

## Patentansprüche

1. Verfahren zum Aufbauen einer Lenkungstabelle, das Folgendes umfasst:
Aufteilen (101) einer Datenstruktur einer Lenkungstabelle in einen Stamm und einen TRIE-Teilbaum;
Hinzufügen (102) von Einträgen der Lenkungstabelle zu dem TRIE-Teilbaum; und
Speichern (103) eines Erweiterungs-Teilknotens der Wurzel des TRIE-Teilbaums in dem Stamm, wobei eine Höhe des TRIE-Teilbaums kleiner oder gleich einem eingestellten Schwellenwert der Höhe ist und der Erweiterungs-Teilknoten der Wurzel des TRIE-Teilbaums eine Teilwurzel aus in der Wurzel des TRIE-Teilbaums enthaltenen Präfix-Teilknoten ist;
wobei das Verfahren ferner Folgendes umfasst:
falls die Höhe des TRIE-Teilbaums nach dem Hinzufügen der Einträge der Lenkungstabelle größer ist als der Schwellenwert der Höhe, Abspalten eines Zweigs, der in dem TRIE-Teilbaum ist und die Höhe aufweist, die größer ist als der Schwellenwert der Höhe, von dem TRIE-Teilbaum, um einen neuen TRIE-Teilbaum zu erhalten; und
Speichern eines Erweiterungs-Teilknotens einer Wurzel des neuen TRIE-Teilbaums in dem Stamm, wobei die Wurzel des neuen TRIE-Teilbaums ein Knoten ist, der zwischen dem Zweig, der in dem TRIE-Teilbaum ist und die Höhe aufweist, die größer ist als der Schwellenwert der Höhe, und der Wurzel des TRIE-Teilbaums verbunden ist; oder
das Verfahren ferner Folgendes umfasst:
falls die Höhe des TRIE-Teilbaums nach dem Löschen von Einträgen der Lenkungstabelle kleiner ist als der Schwellenwert der Höhe und der TRIE-Teilbaum einen Vorgänger-TRIE-Teilbaum aufweist, Kombinieren der Wurzel des TRIE-Teilbaums mit dem Vorgänger-TRIE-Teilbaum und Löschen des Erweiterungs-Teilknotens der Wurzel des TRIE-Teilbaums aus dem Stamm.

2. Verfahren zum Aufbauen einer Lenkungstabelle nach Anspruch 1, das ferner Folgendes umfasst:
falls die Höhe des TRIE-Teilbaums nach dem Aufspalten kleiner ist als der Schwellenwert der Höhe und der TRIE-Teilbaum einen Vorgänger-TRIE-Teilbaum aufweist, Kombinieren der Wurzel des TRIE-Teilbaums mit dem Vorgänger-TRIE-Teilbaum und Löschen des Erweiterungs-Teilknotens der Wurzel des TRIE-Teilbaums aus dem Stamm.

3. Verfahren zum Aufbauen einer Lenkungstabelle nach einem der Ansprüche 1 bis 2, das ferner Folgendes umfasst:
Aufbauen des TRIE-Teilbaums unter Verwendung eines TRIE-Algorithmus und Aufbauen des Stamms unter Verwendung von Bereichsanpassung, B-Baum oder eines ternären inhaltsadressierbaren Speichers.

4. Vorrichtung zum Aufbauen einer Lenkungstabelle, die Folgendes umfasst:
ein Aufteilungsmodul (51), das konfiguriert ist, eine Datenstruktur einer Lenkungstabelle in einen Stamm und einen TRIE-Teilbaum aufzuteilen;
ein Eintraghinzufügungsmodul (52), das konfiguriert ist, Einträge der Lenkungstabelle zu dem TRIE-Teilbaum hinzuzufügen; und
ein Speichermodul (53), das konfiguriert ist, einen Erweiterungs-Teilknoten der Wurzel des TRIE-Teilbaums in dem Stamm zu speichern, wobei die Höhe des TRIE-Teilbaums kleiner oder gleich einem eingestellten Schwellenwert der Höhe ist und der Erweiterungs-Teilknoten der Wurzel des TRIE-Teilbaums eine Teilwurzel aus in der Wurzel des TRIE-Teilbaums enthaltenen Präfix-Teilknoten ist;
wobei die Vorrichtung ferner Folgendes umfasst:
ein Aufspaltungsmodul (54), das konfiguriert ist, falls die Höhe des TRIE-Teilbaums nach dem Hinzufügen der Einträge der Lenkungstabelle größer ist als der Schwellenwert der Höhe, einen Zweig, der in dem TRIE-Teilbaum ist und die Höhe aufweist, die größer ist als der Schwellenwert der Höhe, von dem TRIE-Teilbaum abzuspalten, um einen neuen TRIE-Teilbaum zu erhalten; und
das Speichermodul (53) ferner konfiguriert ist, einen Erweiterungs-Teilknoten einer Wurzel des neuen TRIE-Teilbaums in dem Stamm zu speichern, wobei die Wurzel des neuen TRIE-Teilbaums ein Knoten ist, der zwischen dem Zweig, der in dem TRIE-Teilbaum ist und die Höhe aufweist, die größer ist als der Schwellenwert der Höhe, und der Wurzel des TRIE-Teilbaums verbunden ist; oder
die Vorrichtung ferner Folgendes umfasst:
ein Kombinierungs- und Löschmodul (56), das konfiguriert ist, falls die Höhe des TRIE-Teilbaums nach dem Aufspalten kleiner ist als der Schwellenwert der Höhe und der TRIE-Teilbaum einen Vorgänger-TRIE-Teilbaum aufweist, die Wurzel des TRIE-Teilbaums mit dem Vorgänger-TRIE-Teilbaum zu kombinieren und den Erweiterungs-Teilknoten der Wurzel des TRIE-Teilbaums aus dem Stamm zu löschen.

5. Vorrichtung zum Aufbauen einer Lenkungstabelle nach Anspruch 4, wobei das Kombinierungs- und Löschmodul (56) ferner konfiguriert ist, falls die Höhe des TRIE-Teilbaums nach dem Löschen von Einträgen der Lenkungstabelle kleiner ist als der Schwellenwert der Höhe und der TRIE-Teilbaum einen Vorgänger-TRIE-Teilbaum aufweist, die Wurzel des TRIE-Teilbaums mit dem Vorgänger-TRIE-Teilbaum zu kombinieren und den Erweiterungs-Teilknoten der Wurzel des TRIE-Teilbaums aus dem Stamm zu löschen.

## Revendications

1. Procédé de construction de table de routage, comprenant :
la partition (101) d'une structure de données appartenant à une table de routage en un circuit de connexion et en une arborescence auxiliaire établie selon l'algorithme TRIE,
l'ajout (102) d'entrées de la table de routage à l'arborescence auxiliaire TRIE, et
le stockage (103) d'un sous noeud de mise à jour de la racine de l'arborescence auxiliaire TRIE dans le circuit de connexion, la taille de l'arborescence auxiliaire TRIE étant inférieure ou égale à un seuil de taille défini et le sous noeud de mise à jour de la racine de l'arborescence auxiliaire TRIE étant une racine auxiliaire parmi des sous noeuds formant préfixe compris dans la racine de l'arborescence auxiliaire TRIE,
le procédé comprend en outre :
la séparation, si la taille de l'arborescence auxiliaire TRIE après l'ajout des entrées de la table de routage est supérieure au seuil de taille, à partir de l'arborescence auxiliaire TRIE, d'une branche qui se trouve dans l'arborescence auxiliaire TRIE et qui présente une taille supérieure au seuil de taille, afin d'obtenir une nouvelle arborescence auxiliaire TRIE, et
le stockage d'un sous noeud de mise à jour appartenant à une racine de la nouvelle arborescence auxiliaire TRIE dans le circuit de connexion, la racine de la nouvelle arborescence auxiliaire TRIE étant un noeud relié entre la branche qui se trouve dans l'arborescence auxiliaire TRIE et qui présente la taille supérieure au seuil de taille et la racine de l'arborescence auxiliaire TRIE, ou
le procédé comprend en outre :
la combinaison, si la taille de l'arborescence auxiliaire TRIE après avoir supprimé des entrées de la table de routage est plus petite que le seuil de taille, et que l'arborescence auxiliaire TRIE possède une arborescence auxiliaire TRIE parente, de la racine de l'arborescence auxiliaire TRIE à l'arborescence auxiliaire TRIE parente et
la suppression, du circuit de connexion, du sous noeud de mise à jour de la racine de l'arborescence auxiliaire TRIE.

2. Procédé de construction de table de routage selon la revendication 1, comprenant en outre :
la combinaison de la racine de l'arborescence auxiliaire TRIE à l'arborescence auxiliaire TRIE parente, si la taille de l'arborescence auxiliaire TRIE après la séparation est inférieure au seuil de taille et que l'arborescence auxiliaire TRIE possède une arborescence auxiliaire TRIE parente, et la suppression, du circuit de connexion, du sous noeud de mise à jour de la racine de l'arborescence auxiliaire TRIE.

3. Procédé de construction de table de routage selon l'une quelconque des revendications 1 à 2, comprenant en outre :
l'établissement de l'arborescence auxiliaire TRIE en utilisant un algorithme de type TRIE et l'établissement du circuit de connexion en utilisant une correspondance de plages, une arborescence B, ou une mémoire adressable de contenu ternaire.

4. Dispositif de construction de table de routage, comprenant :
un module de partition (51), configuré pour partitionner une structure de données appartenant à une table de routage en un circuit de connexion et en une arborescence auxiliaire TRIE,
un module d'ajout d'entrées (52), configuré pour ajouter des entrées de la table de routage à l'arborescence auxiliaire TRIE, et
un module de stockage (53), configuré pour stocker un sous noeud de mise à jour de la racine de l'arborescence auxiliaire TRIE dans le circuit de connexion, dans lequel la taille de l'arborescence auxiliaire TRIE est inférieure ou égale à un seuil de taille défini, et le sous noeud de mise à jour de la racine de l'arborescence auxiliaire TRIE est une racine auxiliaire parmi des sous noeuds formant préfixe compris dans la racine de l'arborescence auxiliaire TRIE,
le dispositif comprend en outre :
un module de séparation (54), configuré, si la taille de l'arborescence auxiliaire TRIE après l'ajout des entrées de la table de routage est supérieure au seuil de taille, pour séparer, à partir de l'arborescence auxiliaire TRIE, une branche qui se trouve dans l'arborescence auxiliaire TRIE et qui présente la taille supérieure au seuil de taille afin d'obtenir une nouvelle arborescence auxiliaire TRIE, et
le module de stockage (53), étant configuré en outre pour stocker un sous noeud de mise à jour d'une racine de la nouvelle arborescence auxiliaire TRIE dans le circuit de connexion, la racine de la nouvelle arborescence auxiliaire TRIE étant un noeud relié entre la branche qui se trouve dans l'arborescence auxiliaire TRIE et qui a une taille supérieure au seuil de taille et la racine de l'arborescence auxiliaire TRIE, ou
le dispositif comprend en outre :
un module de combinaison et de suppression (56) configuré, si la taille de l'arborescence auxiliaire TRIE après séparation est inférieure au seuil de taille et que l'arborescence auxiliaire TRIE possède une arborescence auxiliaire TRIE parente, pour combiner la racine de l'arborescence auxiliaire TRIE à l'arborescence auxiliaire TRIE parente et supprimer, du circuit de connexion, le sous noeud de mise à jour de la racine de l'arborescence auxiliaire TRIE.

5. Dispositif de construction de table de routage selon la revendication 4, dans lequel le module de combinaison et de suppression (56) est en outre configuré, si la taille de l'arborescence auxiliaire TRIE après suppression des entrées de la table de routage est inférieure au seuil de taille et que l'arborescence auxiliaire TRIE possède une arborescence auxiliaire TRIE parente, pour combiner la racine de l'arborescence auxiliaire TRIE à l'arborescence auxiliaire TRIE parente, et pour supprimer, du circuit de connexion, le sous noeud de mise à jour de la racine de l'arborescence auxiliaire TRIE.
